# EUROPÄISCHE PATENTSCHRIFT

(11) **EP 1 145 924 B1**
(45) Veröffentlichungstag und Bekanntmachung des Hinweises auf die Patenterteilung: **12.05.2004**
(21) Anmeldenummer: 00127628.6
(22) Anmeldetag: 16.12.2000
(51) Int. Cl.: B60R 22/20

(54) **Vorrichtung zur Gurthöhenverstellung an Sicherheitsgurten**
Height adjustment device for safety belts
Dispositif de réglage en hauteur pour ceintures de sécurité

(30) Priorität: 11.04.2000 DE 10017970
(43) Veröffentlichungstag der Anmeldung: 17.10.2001
(73) Patentinhaber: KENDRION RSL GmbH & Co.KG, 57368 Lennestadt (DE)
(72) Erfinder: Stenzel, Wolfgang, 59889 Eslohe-Cobbenrode (DE); Lohmann, Horst, 59846 Sundern (DE); Rau, Dirk, 57413 Finnentrop (DE)
(74) Vertreter: Köchling, Conrad, Dipl.-Ing.

(56) Entgegenhaltungen:
- EP-A- 0 150 065
- DE-C- 19 500 268
- DE-U- 20 001 324
- US-A- 4 711 498
- US-A- 5 794 977

## Beschreibung

Die Erfindung betrifft eine Vorrichtung bestehend aus einer an einem Fahrzeugaufbauteil angebrachten Riegelvorrichtung mit einer Führungsschiene aus Metall und mit darin angeordneten Rastausnehmungen, in welche ein zugeordneter Rasthebel aus Metall einer Rasteinrichtung mit einer Rastnase eingreift, der Rasthebel in einem in der Führungsschiene längsbeweglichen und mit einer Handhabe gekoppelten Gleitstück schwenkbeweglich zwischen einer Rast- und einer Verschiebestellung gelagert ist.

Eine derartige Vorrichtung ist beispielsweise aus der DE 195 00 268 C1 bekannt. Bei der bekannten Ausbildung ist die Höhenverstellvorrichtung so ausgebildet, daß bei vorragender Rastsicherheit im Belastungsfall der Bedienungskomfort bei der Verstellung des Beschlages verbessert ist. Hierzu ist bei der bekannten Ausbildung vorgesehen, daß der Rasthebel eine zwischen seiner Rastnase und seiner Abstützung an dem Gleitstück angeordnete, einen durch einen Anschlag am Rasthebel begrenzten und im Belastungsfall durchschrittenen Verformungsweg für die Rastnase ausbildende Materialschwächung aufweist. Hierdurch wird erreicht, daß der für den Belastungsfall (Crashfall) erforderliche Hinterschnitt der Rastnase sich erst bei Belastung des Rasthebels einstellt, während bei der Betätigung des unbelasteten Rasthebels für die Verstellung der Höhenverstellvorrichtung dieser Hinterschnitt noch nicht gegeben ist, so daß die Bewegung des Rasthebels aus der Raststellung heraus wie auch nach Abschluß der Verstellbewegung in die Raststellung zurück durch eine entsprechende Gestaltung der Rastnase an dem Rasthebel erleichtert und so der Bedienungskomfort verbessert ist. Da bei einem ohne einen im Belastungsfall ausreichenden Hinterschnitt seiner Rastnase ausgeführten Rasthebel die Gefahr eines Ausrastens im Belastungsfall (beispielsweise Crashfall) besteht, weil die Belastung der Höhenverstellvorrichtung eine Kraftkomponente in Richtung Entriegelung des Rasthebels gegeben ist, ist durch die Ausgestaltung des Rasthebels mit dem zugeordneten Verformungsweg der zur Einstellung eines erst im Belastungsfall wirksamen Hinterschnittes die Rastsicherheit des Rasthebels nach wie vor gegeben.

Ausgehend von diesem Stand der Technik liegt der Erfindung die Aufgabe zugrunde, eine Vorrichtung gattungsgemäßer Art zu schaffen, bei der bei hoher Rastsicherheit im Belastungsfall der Bedienungskomfort bei der Verstellung des Beschlages weiter verbessert ist, bei der eine Geräuschreduzierung bei der bestimmungsgemäßen Benutzung erreicht wird und bei der die Lauf- und Gleiteigenschaften bei der bestimmungsgemäßen Verstellung verbessert sind.

Zur Lösung dieser Aufgabe schlägt die Erfindung vor, daß der Rasthebel eine erste Rastnase aufweist, die im Crashfall mit einer Randkante einer Rastausnehmung der Führungsschiene in Eingriff ist, und daß die erste Rastnase durch eine Kunststoffeinlage überdeckt ist, die eine zweite Rastnase bildet, die im normalen Betriebszustand der Vorrichtung an der Randkante der Rastausnehmung angreift.

Erfindungsgemäß kann der aus Stahl bestehende Rasthebel eine formstabile Rastnase aufweisen, die aber bei normalem Betriebszustand durch die Kunststoffeinlage überdeckt ist, die die zweite Rastnase bildet. Diese zweite Rastnase liegt im normalen Betriebszustand in der entsprechenden Randkante der Ausnehmung der Führungsschiene an, wobei durch die Ausbildung aus Kunststoff eine Geräuschreduzierung erreicht ist. Zudem ist es infolge der Ausbildung aus Kunststoff auch erleichtert möglich, die zweite Rastnase durch Bedienung der Vorrichtung aus der Rastausnehmung der Führungsschiene in einfacher Weise auszurasten, bzw. einrasten zu lassen, was durch die verbesserten Laufund Gleiteigenschaften des Kunststoffmaterials erreicht wird. In einem extremen Belastungsfall, beispielsweise im Crashfall, wird die Kunststoffeinlage, die die zweite Rastnase bildet, in dem Bereich verformt und weggedrückt, in welchem die zweite Rastnase an der entsprechenden Randkante der Ausnehmung der Führungsschiene anliegt, so daß in diesem Fall die erste Rastnase an der Randkante der Ausnehmung zur Wirkung kommt, wodurch eine hohe Rastsicherheit im Belastungsfalle erreicht wird.

Bevorzugt ist dabei vorgesehen, daß die erste Rastnase scharfkantig und mit einem Hinterschnitt ausgebildet ist.

Hierdurch wird die Rastsicherheit im Belastungsfall noch weiter verbessert.

Um den Bedienungskomfort zu erhöhen kann zudem vorgesehen sein, daß die zweite Rastnase durch eine steile Schrägfläche gebildet ist, die in Eingriffslage mit der Randkantenfläche der Rastausnehmung einen spitzen Winkel bildet.

Zudem kann vorgesehen sein, daß der Rasthebel in seinem der Führungsschiene zugewandten und in der Verschiebestellung etwa parallelen Bereich mit einer Kunststoffhülle versehen ist.

Hierdurch wird eine mögliche Geräuschbildung weiter unterbunden. Zudem werden die Laufund Gleiteigenschaften bei der normalen Bedienung der Gurthöhenverstellung verbessert. Desweiteren kann bevorzugt vorgesehen sein, daß an der Kunststoffhülle eine Federhalterung für eine auf den Rasthebel einwirkende Feder angeformt ist.

Die Kunststoffhülle kann als Federhalterung ausgebildet sein, so daß eine an sich bekannte und übliche, auf den Rasthebel einwirkende Feder in einfacher Weise gehaltert werden kann, wobei auch hier eine Geräuschreduzierung bei der betrieblichen Belastung erreicht wird.

Zudem kann auch vorgesehen sein, daß an der Kunststoffhülle ein Endanschlag angeformt ist.

Die Kunststoffhülle kann beispielsweise einen Endanschlag für die Begrenzung des Verstellweges aufweisen. Insbesondere ist auch bevorzugt vorgesehen, daß die zweite Rastnase samt Kunststoffhülle an den Rasthebel angeformt ist.

Ein Ausführungsbeispiel der Erfindung ist in der Zeichnung gezeigt und im Folgenden näher beschrieben.

Es zeigt:
- Figur 1: die wesentlichen Teile einer Höhenverstellvorrichtung in entriegelter Stellung;
- Figur 2: desgleichen in verrasteter Stellung;
- Figur 3: eine vergrößerte Einzelheit im Belastungsfall (Crashfall).

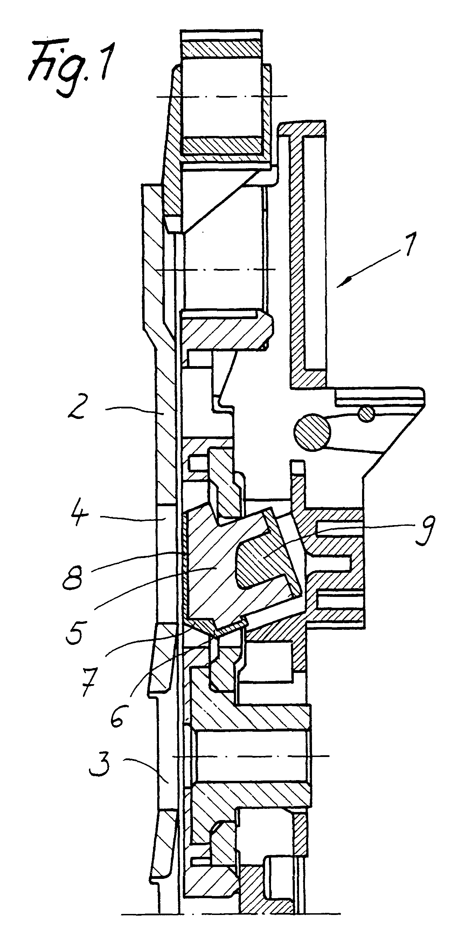

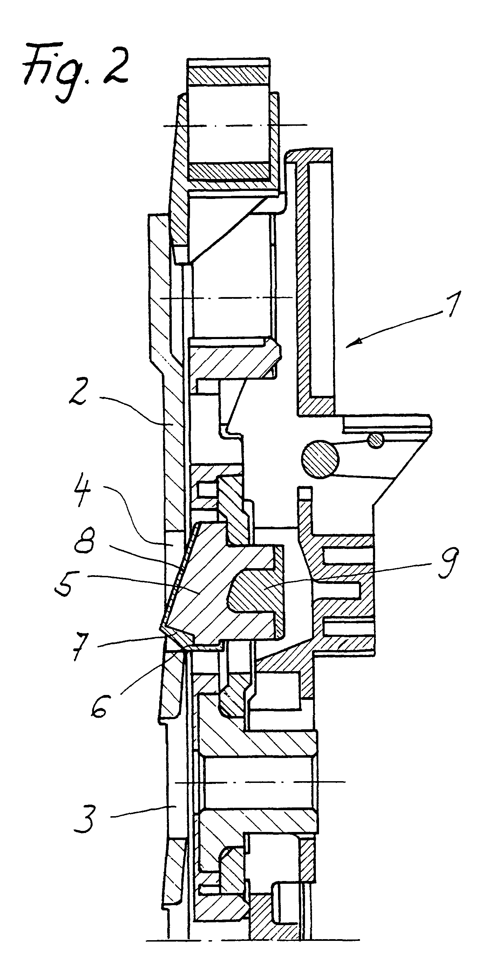

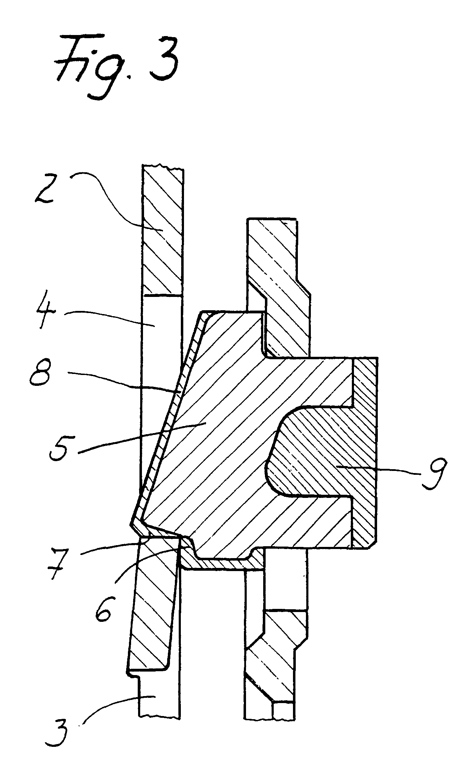

In der Zeichnung ist eine Vorrichtung zur Höhenverstellung des oberen Umlenk- oder Befestigungsbeschlages für den Schultergurt eines Sicherheitsgurtsystems bei Kraftfahrzeugen gezeigt. Sie besteht aus einer an einem Fahrzeugaufbauteil anbringbaren Vorrichtung 1 mit einer Führungsschiene 2, die vertikal ausgerichtet installiert ist und mit Abstand hintereinander mehrere Rastausnehmungen 3,4 aufweist. In diese Rastausnehmungen 3,4 kann ein Rasthebel 5 der Vorrichtung mit einer festen Rastnase 6 eingreifen. Der Rasthebel 5 ist in einem an der Führungsschiene 2 längsbeweglichen Gleitstück schwenkbeweglich gelagert, so daß durch entsprechende Betätigung die Verschiebestellung gemäß Figur 1 manuell eingestellt werden kann und durch Verschiebung der Vorrichtung 1 entlang der Führungsschiene 2 ein Einrasten in die Rastausnehmungen 3 oder 4 folgen kann. Die erste Rastnase 6 ist von einer zweiten Rastnase 7 überdeckt, die durch eine Kunststoffeinlage gebildet ist. Im Normalbetriebszustand gemäß Figur 1 und 2 ist lediglich die zweite Rastnase 7 wirksam, so daß diese sich in der Eingriffslage gemäß Figur 2 an der entsprechenden Randkante oder Fläche der Randkante der Rastausnehmung 3 oder 4 abstützt. Im Crashfall, der in Figur 3 verdeutlicht ist, wir die zweite Rastnase 7, die durch die Kunststoffeinlage gebildet ist, verdrängt, weil sich die Randkante der Ausnehmung 3 oder 4 der Führungsschiene 2 unter der Belastung in das Material des Kunststoffes eindrückt und den Kunststoff verdrängt, so daß die erste Rastkante 6 des metallischen Rasthebels 5 zum Eingriff kommt, was zu einer sicheren Verriegelunglage führt. Vorzugsweise ist die erste Rastkante 6 relativ scharfkantig und ggf. mit Hinterschnitt ausgebildet, um die Rastsicherheit zu gewährleisten. Die zweite Rastnase 7 weist an ihrer der entsprechenden Randkante der Ausnehmung 3 oder 4 zugewandten Fläche eine relativ steile Schrägfläche auf, die in der Eingriffslage gemäß Figur 2 mit der entsprechenden Fläche der Randkante der Rastausnehmung 3 oder 4 einen spitzten Winkel einschließt. Darüber hinaus ist der Rasthebel 5 in dem Bereich, der der Führungsschiene 2 zugewandt ist, mit einer Kunststoffhülle 8 (Beschichtung) versehen, wodurch sowohl eine Geräuschreduzierung (Vermeidung von Klappergeräuschen) als auch eine Verbesserung der Lauf- und Gleiteigenschaften bei der Verstellung erreicht wird. Der Rasthebel 5 ist zudem in seinem der Führungsschiene 2 abgewandten Bereich (bei 9) mit einer Kunststoffhülle versehen. Diese Kunststoffhülle kann Bestandteil einer Federhalterung für eine auf den Rasthebel 2 einwirkende Feder sein. Zusätzlich kann an der Kunststoffhülle 9 ein Endanschlag für die Begrenzung des Betätigungsweges angeordnet sein. Vorzugsweise ist die gesamte Kunststoffbeschichtung, also die zweite Rastnase 7 Kunststoffhülle 8 und die Kunststoffhülle 9 an den Rasthebel 2 angeformt. Die Erfindung stellt eine Gurthöhenverstelleinrichtung zur Verfügung, die bei der normalen Benutzung zu einer Verminderung der Geräuschbildung (Klappergeräusch oder dergleichen) führt, wobei die Lauf- und Gleiteigenschaften bei der manuellen Verstellung verbessert sind. Dennoch wird eine hohe Rastsicherheit im Belastungsfall (Crashfall) erreicht.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung (1) zur Höhenverstellung des oberen Umlenk- oder Befestigungsbeschlages für den Schultergurt eines Sicherheitsgurtsystems insbesondere in Kraftfahrzeugen, bestehend aus einer an einem Fahrzeugaufbauteil angebrachten Riegelvorrichtung mit einer Führungsschiene (2) aus Metall und mit darin angeordneten Rastausnehmungen (3, 4), in welche ein zugeordneter Rasthebel (5) aus Metall einer Rasteinrichtung mit einer Rastnase (6) eingreift, der Rasthebel (5) in einem in der Führungsschiene (2) längsbeweglichen und mit einer Handhabe gekoppelten Gleitstück schwenkbeweglich zwischen einer Rast- und einer Verschiebestellung gelagert ist, **dadurch gekennzeichnet, daß** der Rasthebel (5) eine erste Rastnase (6) aufweist, die im Crashfall mit einer Randkante einer Rastausnehmung (3,4) der Führungsschiene (2) in Eingriff ist, und daß die erste Rastnase (6) durch eine Kunststoffeinlage überdeckt ist, die eine zweite Rastnase (7) bildet, die im normalen Betriebszustand der Vorrichtung an der Randkante der Rastausnehmung (3,4) angreift.

2. Vorrichtung nach Anspruch 1, **dadurch gekennzeichnet, daß** die erste Rastnase (6) scharfkantig und mit einem Hinterschnitt ausgebildet ist.

3. Vorrichtung nach einem der Ansprüche 1 oder 2, **dadurch gekennzeichnet, daß** die zweite Rastnase (7) durch eine steile Schrägfläche gebildet ist, die in Eingriffslage mit der Randkantenfläche der Rastausnehmung (3,4) einen spitzen Winkel bildet.

4. Vorrichtung nach einem der Ansprüche 1 bis 3, **dadurch gekennzeichnet, daß** der Rasthebel (5) in seinem der Führungsschiene (2) zugewandten und in der Verschiebestellung etwa parallelen Bereich mit einer Kunststoffhülle (8) versehen ist.

5. Vorrichtung nach einem der Ansprüche 1 bis 4, **dadurch gekennzeichnet, daß** der Rasthebel (5) in seinem der Führungsscheine (2) abgewandtem Bereich (bei 9) mit einer Kunststoffhülle versehen ist.

6. Vorrichtung nach Anspruch 5, **dadurch gekennzeichnet, daß** an der Kunststoffhülle (9) eine Federhalterung für eine auf den Rasthebel einwirkende Feder angeformt ist.

7. Vorrichtung nach Anspruch 5, **dadurch gekennzeichnet, daß** an der Kunststoffhülle (9) ein Endanschlag angeformt ist.

8. Vorrichtung nach einem der Ansprüche 1 bis 7, **dadurch gekennzeichnet, daß** die zweite Rastnase (7) samt Kunststoffhülle (8,9) an den Rasthebel (5) angeformt ist.

## Claims

1. A device (1) for the height adjustment of the upper deflection or fixing mounting for the shoulder belt of a safety belt system in particular in motor vehicles, consisting of a locking device, mounted on a vehicle component, with a guide rail (2) made of metal and with recesses (3, 4) disposed therein, into which an associated metal notch lever (5) of a catching device with a snap-in lug (6) engages, the notch lever (5) is mounted in a sliding block, which is longitudinally moveable in the guide rail (2) and is coupled ,with a handle, with swivelling mobility between a locking and a displacement position,
**characterised in that** the notch lever (5) comprises a first snap-in lug (6), which in the event of a crash is in engagement with an edge of a recess (3, 4) of the guide rail (2),
and **in that** the first snap-in lug (6) is covered by a plastic insert which forms a second snap-in lug (7) which in the normal operating state of the device acts on the edge of the recess (3, 4).

2. A device according to Claim 1,
**characterised in that** the first snap-in lug (6) is constructed with sharp edges and with an undercut.

3. A device according to one of Claims 1 or 2,
**characterised in that** the second snap-in lug (7) is formed by a steep inclined surface which in the engagement position with the edge surface of the recess (3, 4) forms an acute angle.

4. A device according to one of Claims 1 to 3,
**characterised in that** the notch lever (5) is provided with a plastic covering (8) in its region facing the guide rail (2) and roughly parallel in the displacement potion.

5. A device according to one of Claims 1 to 4,
**characterised in that** the notch lever (5) is provided with a plastic covering in its region remote from the guide rail (2) (at 9).

6. A device according to Claim 5,
**characterised in that** a spring mounting for a spring acting on the notch lever is moulded on the plastic covering (9).

7. A device according to Claim 5,
**characterised in that** an end stop is moulded on the plastic covering (9).

8. A device according to one of Claims 1 to 7,
**characterised in that** the second snap-in lug (7) together with plastic covering (8, 9) is moulded onto the notch lever (5).

## Revendications

1. Dispositif (1) de réglage en hauteur de la ferrure de renvoi ou de fixation supérieure pour la ceinture d'épaule d'un système de ceinture de sécurité, en particulier dans des véhicules automobiles, composée d'un dispositif de verrouillage, monté sur une partie de carrosserie de véhicule, avec une glissière de guidage (2), en métal, et avec des évidements d'encliquetage (3, 4) ménagés dans celle-ci, dans lesquels s'engage, par un ergot d'encliquetage (6), un levier d'encliquetage (5) associé, réalisé en métal, d'un dispositif d'encliquetage, le levier d'encliquetage (5) étant monté avec une mobilité de pivotement, entre une position encliquetée et une position de déplacement, dans un patin coulissant, déplaçable longitudinalement dans la glissière de guidage (2) et couplé à une manette, **caractérisé en ce que** le levier d'encliquetage (5) présente un premier ergot d'encliquetage (6) qui, en cas de collision, vient en prise avec une arête de bordure d'un évidement d'encliquetage (3, 4) de la glissière de guidage (2), et **en ce que** le premier ergot d'encliquetage (6) est couvert par une garniture en matière synthétique, formant un deuxième ergot d'encliquetage (7) qui, en état de fonctionnement normal du dispositif, agit sur l'arête de bordure de l'évidement d'encliquetage (3, 4).

2. Dispositif selon la revendication 1, **caractérisé en ce que** le premier ergot d'encliquetage (6) est à arête vive et présente une contre-dépouille.

3. Dispositif selon l'une des revendications 1 ou 2, **caractérisé en ce que** le deuxième ergot d'encliquetage (7) est formé par une surface oblique à pente raide, qui, en position d'engagement, forme avec la face d'arête de bordure de l'évidement d'encliquetage (3, 4), un angle aigu.

4. Dispositif selon l'une des revendications 1 à 3, **caractérisé en ce que** le levier d'encliquetage (5) est muni d'une gaine en matière synthétique (8) dans sa zone tournée vers la glissière de guidage (2) et à peu près parallèle lorsqu'on est en position de coulissement.

5. Dispositif selon l'une des revendications 1 à 4, **caractérisé en ce que** le levier d'encliquetage (5) est muni d'une gaine en matière synthétique, dans sa zone (en 9) opposée à la glissière de guidage (2).

6. Dispositif selon la revendication 5, **caractérisé en ce que**, sur la gaine en matière synthétique (9), est formé d'un seul tenant un support de ressort pour un ressort agissant sur le levier d'encliquetage.

7. Dispositif selon la revendication 5, **caractérisé en ce qu'**une butée de fin de course est formée d'un seul tenant sur la gaine en matière synthétique (9).

8. Dispositif selon la revendication 1 à 7, **caractérisé en ce que** le deuxième ergot d'encliquetage (7) avec la gaine en matière synthétique (8, 9), est formé d'un seul tenant sur le levier d'encliquetage (5).
